# EUROPÄISCHE PATENTANMELDUNG

(11) **EP 1 684 513 A1**
(43) Veröffentlichungstag der Anmeldung: **26.07.2006**
(21) Anmeldenummer: 05001451.3
(22) Anmeldetag: 25.01.2005
(51) Int. Cl.: H04N 7/173

(54) **Vorrichtung für einen Empfänger zum Dekodieren vorgegebener kodierter Fernseh- und Radiosignale**

(71) Anmelder: Premiere Fernsehen GmbH & Co. KG, 85774 Unterföhring (DE)
(72) Erfinder: Hansen, Holger, 81679 München (DE)
(74) Vertreter: Jacoby, Georg

(57) **Zusammenfassung**

Die vorliegende Erfindung stellt eine Vorrichtung, insbesondere eine Fernbedienung (12), für einen Empfänger (8) zum Dekodieren vorgegebener Fernseh- und/oder Radiosignale eines solches Signale in kodierter Form bereitstellenden Systems (2) unter der Voraussetzung einer vorherigen erfolgreichen Identifizierung der Vorrichtung (12) gegenüber dem System bereit, wobei die Vorrichtung (12) die eine Empfängersteuereinrichtung zur Steuerung des Empfängers (8) über eine erste Signalstrecke (10), eine Kennungseinrichtung zur automatischen Bereitstellung einer die Vorrichtung (12) identifizierenden Kennung, und eine Kommunikationseinrichtung zur automatischen Übertragung der Kennung von der Vorrichtung (12) zu dem System (2) über eine zweite Signalstrecke (14) umfasst.

## Beschreibung

### Hintergrund der Erfindung

Die vorliegende Erfindung betrifft im Allgemeinen eine Vorrichtung für einen Empfänger zum Dekodieren von Fernseh- und/oder Radiosignalen, eines solche Signale in kodierter Form bereitstellenden Systems, eine eine derartige Vorrichtung umfassende Anordnung sowie ein entsprechendes Verfahren.

### Gebiet der Erfindung

Neben herkömmlichen Fernsehprogrammen, die mit jedem Fernsehgerät ohne zusätzliche Empfangseinrichtungen empfangen und wiedergegeben werden können, gewinnen Fernsehprogramme zunehmend an Bedeutung, die nur unter Verwendung spezieller Empfänger wiedergegeben werden können. Dabei werden Fernsehsignale in kodierter Form übertragen und empfängerseitig dekodiert. Hierfür verwendbare Empfänger werden auch als Set-Top-Boxen bezeichnet.

Bei unter Verwendung kodierter Fernsehsignale übertragenen, kostenpflichtigen Fernsehprogrammen kann man zwischen zwei Arten unterscheiden: Fernsehprogramme, die vergleichbar zu herkömmlichen, ohne Verwendung kodierter Signale ein kontinuierliches Programm bereitstellen, bei dem sich Fernsehsendungen aneinander reihen, und Fernsehprogramme, die durch den Benutzer individuell abgerufen und/oder zusammengestellt werden können. Zusammenfassend werden derartige Fernsehprogramme als Pay-TV bezeichnet, wobei die letztere, individuell abrufbare und/oder zusammenstellbare Art von Fernsehprogrammen als Pay-Per-View bezeichnet wird.

Beim Pay-TV mit kontinuierlichen Fernsehprogrammen ist es üblich, empfängerseitig dauerhaft gültige Entschlüsselungsinformationen (Dekodierungskodes) zu verwenden, wobei im Allgemeinen eine zeitbezogene Pauschalabrechnungen durchgeführt wird. Im Gegensatz dazu werden bei auf Pay-Per-View basierenden Fernsehprogrammen empfängerseitig Entschlüsselungsinformationen verwendet, die eine Dekodierung gewünschter, vorgegebener Fernsehsignale für eine vorbestimmte Zeitdauer und/oder zu einem vorbestimmten Zeitpunkt beginnend zulassen; im Allgemeinen wird dabei eine zeit- und nutzungsbezogene Abrechnung verwendet, bei der Anzahl und/oder Zeitdauer gewünschter Fernsehprogramme zugrundegelegt wird.

Um bei individuell abrufbaren und/oder zusammenstellbaren, Pay-Per-View-Fernsehprogrammen die jeweiligen Entschlüsselungsinformationen zum zur Wiedergabe vorgesehenen Empfänger zu übertragenen und/oder eine auf den zur Wiedergabe vorgesehenen Empfänger bzw. dessen Benutzer bezogene Abrechnung durchführen zu können, ist einem System, das gewünschte Fernsehprogramme in kodierter Form bereitstellt, mitzuteilen, um welchen Empfänger bzw. welchen Benutzer es sich handelt.

Hierfür ist es bekannt, den Empfänger und/oder den Benutzer identifizierende Informationen mittels eines Telefons zu übertragen. Dabei ist es erforderlich, dass der Benutzer die zur Identifizierung erforderlichen Informationen manuell eingibt, eine in diesem Zusammenhang vorgesehene Telefonnummer des Systems selbst wählt und die Übertragung der Informationen selbst in die Wege leitet.

Um dem kodierte Signale bereitstellenden System mitzuteilen, welches Fernsehprogramm gewünscht ist, also welche kodierten Fernsehsignale zu dekodieren sind, sind neben zur Identifizierung erforderlichen Informationen auch den jeweiligen Fernsehwunsch angebende Informationen zu übertragen.

Den jeweiligen Fernsehwunsch angebende Informationen werden üblicherweise bisher ebenfalls unter Verwendung eines Telefons übermittelt. Auch hier ist der Benutzer gezwungen, die Informationen manuell einzugeben, eine entsprechende Telefonnummer des Systems selbst zu wählen und die Informationsübertragung selbst zu bewirken.

### Aufgabe der Erfindung

Aufgabe der vorliegenden Erfindung ist es, Lösungen bereitzustellen, die die Übertragung von Informationen, die zur Dekodierung und Wiedergabe von individuell zusammenstellbaren, in Form kodierter Signale bereitgestellten Rundfunkprogrammen (Fernsehprogramme, Radioprogramme), zu einem solche kodierten Signale bereitstellenden System insbesondere hinsichtlich der durch einen Benutzer durchzuführenden Maßnahmen zu verbessern.

### Kurzbeschreibung der Erfindung

Zur Lösung der obigen Aufgabe stellt die vorliegende Erfindung eine Vorrichtung, eine Anordnung und ein Verfahren gemäß den unabhängigen Ansprüchen bereit.

Insbesondere stellt die vorliegende Erfindung eine Vorrichtung für einen Empfänger zum Dekodieren vorgegebener Fernseh- und/oder Radiosignale eines solche Signale in kodierter Form bereitstellenden Systems unter der Voraussetzung einer vorherigen erfolgreichen Identifizierung der Vorrichtung gegenüber dem System mit einer Empfängersteuereinrichtung zur Steuerung des Empfängers über eine erste Signalstrecke, einer Kennungseinrichtung zur automatischen Bereitstellung einer die Vorrichtung identifizierenden Kennung, und einer Kommunikationseinrichtung zur automatischen Übertragung der Kennung von der Vorrichtung zum System über eine zweite, vorgegebene Signalstrecke bereit.

Auf diese Weise wird eine durch einen Benutzer durchzuführende Maßnahme zur Eingabe der Kennung vermieden, da die Kennung durch die erfindungsgemäße Vorrichtung automatisch bereitgestellt ist. Auch wird durch die erfindungsgemäße Vorrichtung vermieden, dass sich ein Benutzer darum kümmern muss, wie die Kennung zum System übertragen wird, insbesondere welche Signalstrecke zu verwenden ist; entsprechende Eingabemaßnahmen durch den Benutzer entfallen. Vielmehr erfolgt die Übertragung der Kennung erfindungsgemäß automatisch und über eine vorgegebene Signalstrecke.

Vorzugsweise umfasst die erste Signalstrecke wenigstens eine der folgenden Signalstreckenarten, d.h. einzeln oder in Kombination:
- eine festverdrahtete Signalstrecke, z.B. bei einer über eine Signalleitung mit dem Empfänger verbundene Vorrichtung,
- eine Infrarot-Signalstrecke, wie sie z.B. bei bekannten Fernbedienungen für Rundfunkgeräte verwendet wird,
- eine Ultraschall-Signalstrecke, wie sie z.B. bei bekannten Fernbedienungen für Rundfunkgeräte verwendet wird,
- eine Bluetooth-Signalstrecke, z.B. wenn Vorrichtung und Empfänger entsprechende Kommunikationsmittel aufweisen
- eine Signalstrecke gemäß dem DECT-Standard, z.B. wenn, wie unten ausgeführt, die zweite Signalstrecke auch eine Signalstrecke gemäß dem DECT-Standard umfasst, um Komponenten der Kommunikationseinrichtung, der Vorrichtung und der Empfängersteuereinrichtung wenigstens teilweise gemeinsam zu nutzen,
- eine Hochfrequenzfunk-Signalstrecke, und
- eine von einem Computernetzwerk bereitgestellte Signalstrecke, z.B. wenn die Vorrichtung computerimplementiert bereitgestellt ist.

Vorzugsweise umfasst die zweite Signalstrecke wenigstens eine der folgenden Signalstreckenarten, d.h. einzeln oder in Kombination:
- eine festverdrahtete Signalstrecke,
- eine drahtlose Signalstrecke,
- eine Signalstrecke in einem mobilen und/oder stationären Telefonnetz, wenn z.B. die Kommunikationseinrichtung gemäß dem GSM- und/oder UMTS-Standard ausgeführt ist und Kommunikation mit dem System über ein entsprechendes Telefonnetz durchführen kann,
- eine von einem Computernetzwerk bereitgestellte Signalstrecke, z.B. wenn die Vorrichtung als computerimplementiert bereitgestellt ist, und
- eine Signalstrecke gemäß dem DECT-Standard, wenn z.B. die Kommunikationseinrichtung gemäß dem DECT-Standard ausgeführt ist und Kommunikation mit dem System über ein entsprechendes Telefonnetz beispielsweise unter Verwendung eines bei einem Benutzer der Vorrichtung vorhandenen Telefonanschlusses durchführen kann.

Die Empfängersteuereinrichtung kann eine erste Sendeeinrichtung zur Übertragung von Steuerbefehlen von der Vorrichtung zum Empfänger umfassen, um beispielsweise vom Empfänger zu dekodierende und/oder wiederzugebende und/oder zu übertragende Fernsehen- und/oder Radioprogramme zu wählen und/oder Betriebseinstellungen des Empfängers vorzugeben.

Die Empfängersteuereinrichtung kann eine erste Empfangseinrichtung zum Empfang von Daten- und/oder Steuersignalen vom Empfänger umfassen. Beispiele für derartige Signale umfassen unter anderem Signale, die Betriebszustände des Empfängers angeben und/oder Informationen über verfügbare Fernsehen- und/oder Radioprogramme bereitstellen.

Vorzugsweise umfasst die Empfängersteuereinrichtung eine Eingabeschnittstelle zur Eingabe von Steuerbefehlen durch einen Benutzer der Vorrichtung. Beispiele für vorgesehene Steuerbefehle umfassen, Befehle zur Wahl zu dekodierender Fernseh- und/oder Radiosignale und Befehle zur fernseh- und/oder radiosignalunabhängigen Steuerung des Empfängers (z.B. Lautstärke, Helligkeit, etc.).

Insbesondere ist bevorzugt, dass die Eingabeschnittstelle wenigstens eine der folgenden Eingabemittel umfasst:
- eine Tastatur, wie z.B. ein bei bekannten Fernbedienungen verwendetes Eingabefeld,
- eine Spracheingabeeinrichtung, um beispielsweise motorisch eingeschränkte Benutzern zu unterstützen,
- eine berührempfindliche Eingabeeinrichtung, insbesondere wenn eine freie Konfigurierbarkeit der Eingabeeinrichtung erreicht werden soll, und
- eine Einrichtung zum Einlesen von gedruckten Kodes, um z.B. in Programmzeitschriften abgedruckte, Fernseh- und/oder Radioprogramme angebende Kodes einzuscannen.

Vorzugsweise umfasst die Kennungseinrichtung einen Kennungsspeicher, in dem die die Vorrichtung identifizierende Kennung gespeichert ist.

Insbesondere ist bevorzugt, dass der Kennungsspeicher wenigstens eine der folgenden Speichertypen umfasst:
- eine SIM-Karte für ein Telefonnetz, z.B. wenn eine GSM- und/oder UMTS-Übertragungstrecke als zweite Übertragungsstrecke vorgesehen ist,
- eine Smart-Karte für das zu dekodierende Fernseh- und/oder Radiosignale bereitstellenden Systems, wobei die Smart-Karte ansonsten die üblichen Funktionen hinsichtlich des Empfängers bereitstellt,
- einen RAM-Speicher,
- einen Speicher, der die Kennung festverdrahtet speichert, und
- einen Speicher mit einer zeitlich und/oder nutzungsabhängig gültigen Kennung als die die Vorrichtung identifizierenden Kennung, z.B. in einer mit einer Pre-Paid-Karte vergleichbaren Form.

Vorzugsweise umfasst die Kommunikationseinrichtung eine zweite Sendeeinrichtung zum Senden der Kennung von der Vorrichtung zum System.

Die Kommunikationseinrichtung kann einen Speicher mit die zweite Signalstrecke angebenden Daten umfassen. Je nach Ausführungsform der zweiten Signalstrecke können solche Daten z.B. in Form einer oder mehrerer Telefonnummern, unter denen eine Telefonverbindung zwischen Vorrichtung und System aufgebaut werden kann, und/oder eine oder mehrere Computernetzwerkadressen (z.B. Internet-Adressen) vorliegen, mit denen eine netzwerkbasierte Kommunikation zwischen Vorrichtung und System durchgeführt werden kann.

Die Kommunikationseinrichtung kann einen Speicher mit durch einen Benutzer der Vorrichtung änderbaren, zur Übertragung zusammen mit der Kennung bereitgestellten Daten umfassen. Bei Verwendung telefonnetzbasierter Kommunikation zwischen Vorrichtung und System können solche Daten z.B. in Form von einer oder mehreren vorab in der Vorrichtung gespeicherten, aber durch einen Benutzer der Vorrichtung änderbaren SMSs und/oder MMSs vorliegen, in die z.B. ein Programmwunsch des Benutzers eingetragen und dann zusammen mit der Kennung übertragen werden kann, die in die SMS bzw. MMS eingebettet oder von dieser getrennt, aber im Wesentlichen zeitgleich übertragen werden kann. Bei Verwendung computernetzwerkbasierter Kommunikation zwischen Vorrichtung und System können solche Daten z.B. in Form von einer oder mehreren vorab in der Vorrichtung gespeicherten, aber durch einen Benutzer der Vorrichtung änderbaren E-Mails vorliegen, in die z.B. ein Programmwunsch des Benutzers eingetragen und dann zusammen mit der Kennung übertragen werden kann, die in die E-Mail eingebettet oder von dieser getrennt, aber im Wesentlichen zeitgleich übertragen werden kann.

Vorzugsweise umfasst die Kommunikationseinrichtung eine zweite Empfangseinrichtung zum Empfang von Daten- und/oder Steuersignalen vom System. Auf diese Weise können beispielsweise zum Betrieb der Vorrichtung verwendbare Steuerbefehle (z.B. Programmkodes) übertragen werden, um die Vorrichtung zu aktualisieren.

Des weiteren ist vorgesehen, dass die zweite Empfangseinrichtung eingerichtet ist, weitere Signale vom System zu empfangen, die Fernseh- und/oder Radiosignale und/oder Informationen für einen Benutzer der Vorrichtung bereitstellen. Diese Ausführungsform erlaubt es beispielsweise Werbung, Nachrichten, Spiele (z.B. Videospiele) und Mitmachaktionen betreffende Informationen unmittelbar und unabhängig vom Empfänger zur Vorrichtung zu übertragen und dort bereitzustellen und/oder darüber zu informieren. Ferner erlaubt diese Ausführungsform z.B. eine Übertragung von verfügbaren Fernseh- und/oder Radioprogramme betreffenden Daten, beispielsweise in Form eines Fernseh- und/oder Radioprogramms.

Ist eine Eingabeeinrichtung für die erfindungsgemäße Vorrichtung vorgesehen, kann die Kommunikationseinrichtung mit der Eingabeeinrichtung verbunden sein, vorzugsweise - sofern vorhanden - mit der Eingabeeinrichtung der Empfängersteuereinrichtung. Dabei ist vorgesehen, die Kommunikationseinrichtung so auszuführen, dass eingegebene Steuerbefehle über die zweite Signalstrecke zum System übertragen werden können, vorzugsweise ebenfalls automatisch. Auf diese Weise ist es z.B. möglich, zu dekodierende Fernseh- und/oder Radioprogramme und/oder einen Produktwunsch oder -bestellung beispielsweise in Verbindung mit sogenannten Teleshoppingangeboten einzugegeben und entsprechende Daten zum System zu übertragen.

Vorzugsweise umfasst die Vorrichtung einen Speicher, um Informationen über verfügbare Fernseh- und/oder Radiosignale zu speichern. Dies ermöglicht es beispielsweise, mittels der Vorrichtung verfügbare Fernseh- und/oder Radioprogramme ohne Kommunikation mit dem Empfänger und/oder dem System und ohne Verwendung von Programmzeitschriften bereitzustellen.

Die Vorrichtung kann eine Wiedergabeeinrichtung aufweisen, die wenigstens eines der folgenden Wiedergabemittel umfassen kann:
- ein alpha-numerisches Display,
- einen Bildschirm zur statischen und/oder dynamischen Wiedergabe von Bildern, und
- einen Lautsprecher.

Werden wie oben ausgeführt weitere Signale vom System bereitgestellt, die Fernseh- und/oder Radiosignale und/oder Informationen für einen Benutzer der Vorrichtung bereitstellen, wird bevorzugt, die Wiedergabeeinrichtung so auszulegen, dass derartige Signale wiedergegeben werden können. Dabei ist es zusätzlich oder alternativ möglich, dass die zweite Empfangseinrichtung einen Empfang derartiger Signale meldet und mittels der Wiedergabeeinrichtung den Signalempfang angebende Informationen wiedergegeben werden.

Die Vorrichtung kann einen Programmspeicher aufweisen, um Steuerbefehle für den Betrieb der Vorrichtung zu speichern. Dabei ist die Kommunikationseinrichtung und insbesondere, falls vorhanden, die zweite Empfangseinrichtung vorzugsweise so eingerichtet, dass, wie oben ausgeführt, über die zweite Signalstrecke im Programmspeicher zu speichernde Steuerbefehle vom System empfangen werden können.

Bei einer besonders bevorzugten Ausführungsform ist die Vorrichtung als tragbare Fernbedienung für den Empfänger ausgeführt.

Ferner stellt die vorliegende Erfindung eine Anordnung bereit, die ein kodierte Fernseh- und/oder Radiosignale bereitstellendes System, einen Empfänger zum Dekodieren vorgegebener kodierter Signale vom System, eine erste Signalstrecke zur Übertragung der kodierten Signale vom System zum Empfänger, die erfindungsgemäße Vorrichtung, und eine zweite Signalstrecke zur Übertragung der Kennung von der Vorrichtung zum System umfasst, wobei der Empfänger eingerichtet ist, die kodierten Signale nur unter der Voraussetzung einer vorherigen erfolgreichen Identifikation der Vorrichtung gegenüber dem System zu dekodieren.

Die oben gemachten Ausführungen gelten für die folgenden Ausführungsformen der erfindungsgemäßen Anordnung entsprechend und werden daher nicht wiederholt.

Vorzugsweise weist die Anordnung eine mit dem Empfänger verbundene Wiedergabevorrichtung auf, mit der dekodierte Fernseh- und/oder Radiosignale wiedergegeben werden können.

Insbesondere ist es vorgesehen als Empfänger eine sogenannte Set-Top-Box oder eine eine Set-Top-Box umfassende Empfangsvorrichtung zu verwenden.

Des weiteren ist es vorgesehen, dass das System aktuelle Steuerbefehle für den Betrieb der Vorrichtung über die zweite Signalstrecke zur Vorrichtung übertragen kann.

Ferner ist vorgesehen, dass das System über die zweite Signalstrecke von der Vorrichtung zum System übertragene Steuerbefehle und aktuell zu dekodierende Fernseh- und/oder Radiosignale zeitlich korrelieren kann. Diese Ausführungsform erlaubt es beispielsweise, mittels der Vorrichtung zum System übermittelte Produktwünsche oder -bestellungen in Verbindung mit sogenannten Teleshoppingangeboten zeitlich mit dem entsprechenden Teleshoppingangebot zu korrelieren, so dass eine eindeutige Zuordnung eines Produktwunschs oder -bestellung zum aktuellen Teleshoppingangebot ohne weitere Informationen möglich ist. Aus Sicherheitsgründen kann es allerdings vorteilhaft sein, dass das System, bevor es Produktwünsche oder -bestellungen akzeptiert, eine Bestätigung durch den Benutzer verlangt; dies kann beispielsweise erfolgen, indem das System den Benutzer über die erfindungsgemäße Vorrichtung auffordert, eine einfache Bestätigung (z.B. Drücken einer OK-Taste) und/oder eine den Benutzer identifizierende Kennung (z.B. PIN und/oder TAN) in die Vorrichtung einzugeben, die dann automatisch zum System zurückübertragen werden kann.

Vorzugsweise ist das System eingerichtet, neben den aktuell zu dekodierenden Fernseh- und/oder Radiosignalen weitere Signale zum Empfänger und/oder zur Vorrichtung zu übertragen, die Fernseh- und/oder Radiosignale und/oder Informationen für einen Benutzer bereitstellen.

Die Übertragung derartiger Signale kann zeitunkorreliert und/oder in unkodierter Form erfolgen.

Des weiteren stellt die vorliegende Erfindung ein Verfahren für einen Empfänger zum Dekodieren vorgegebener Fernseh- und/oder Radiosignale eines solche Signale in kodierter Form bereitstellenden Systems unter der Voraussetzung einer vorherigen erfolgreichen Identifizierung der erfindungsgemäßen Vorrichtung gegenüber dem System mit folgenden Schritten bereit:
- Vorgeben von durch den Empfänger zu dekodierenden Signalen mittels der erfindungsgemäßen Vorrichtung,
- automatisches Übertragen einer die dem Empfänger zugeordneten Vorrichtung und/oder den Empfänger identifizierenden Kennung zum System über eine Signalstrecke mittels der erfindungsgemäßen Vorrichtung,
- Überprüfen der Kennung durch das System,
- Dekodieren der vorgegebenen Signale durch den Empfänger, wenn das Überprüfen der Kennung durch das System erfolgreich war.

Die oben gemachten Ausführungen gelten für die folgenden Ausführungsformen des erfindungsgemäßen Verfahrens entsprechend und werden daher nicht wiederholt. Insbesondere gelten die obigen Ausführungen hinsichtlich der ersten und zweiten Signalstrecken, Eingabe- und Speichermöglichkeiten für Ausführungsformen des erfindungsgemäßen Verfahrens entsprechend.
Vorzugsweise werden vor Übertragung der Kennung und/oder nach erfolgreicher Überprüfung der Kennung eine weitere Kennung zum System und/oder dem Empfänger übertragen und das Dekodieren der vorgegebenen Signale durch den Empfänger erst dann durchgeführt, wenn das Überprüfen der weiteren Kennung durch das System und/oder den Empfänger erfolgreich war. Dies ist insbesondere bevorzugt, wenn Personen mit unterschiedlichen Rechten Zugriff auf die erfindungsgemäße Vorrichtung haben, um Missbrauch (z.B. Bestellung von Fernsehfilmen für Erwachsene durch Minderjährige) zu vermeiden.

Als weitere Kennung ist insbesondere eine einen Benutzer des Empfängers identifizierende Kennung vorgesehen, z.B. in Form einer PIN und/oder TAN.

Vorzugsweise werden zum Aktualisieren der Vorrichtung über die zweite Signalstrecke aktuelle Steuerbefehle vom System zur Vorrichtung übertragen.

Ferner ist es vorgesehen, Steuerbefehle zeitkorreliert zu aktuell zu dekodierenden Fernseh- und/oder Radiosignalen und/oder zu diesen zeitlich korrelierbar von der Vorrichtung zum System zu übertragen. Die zeitliche Korrelation und/oder Korrelierbarkeit kann erreicht werden, indem diese Steuerbefehle mit einem geeigneten, entsprechenden Zeitcode versehenen und/oder so übertragen werden, dass aufgrund einer bei der Übertragung der Steuerbefehle zu dem System entstehenden Verzögerung auf den Zeitpunkt rückgeschlossen werden kann, an dem die Steuerbefehle ausgesendet wurden.

Vorzugsweise werden zeitunkorreliert zu aktuell zu dekodierenden Fernseh- und/oder Radiosignalen weitere Signale vom System zum Empfänger und/oder zur Vorrichtung übertragen, die Fernseh- und/oder Radiosignale und/oder Informationen für einen Benutzer bereitstellen. Derartige Signale können in kodierter und/oder unkodierter Form verwendet werden.

Dabei ist es vorgesehen, die weiteren Signale mittels der Vorrichtung wiederzugeben, die Fernseh- und/oder Radiosignale und/oder Informationen für einen Benutzer bereitstellen.

Um eine automatische Übertragung der Kennung zu unterstützen, können die zweite Signalstrecke angebende Daten in einer durch einen Benutzer der Vorrichtung nicht änderbaren Form vorab in der Vorrichtung gespeichert werden.

Insbesondere anwendungsabhängig kann als die Kennung eine dauerhaft gültige Kennung oder eine zeitlich und/oder nutzungsabhängig begrenzte Kennung in der Vorrichtung vorab gespeichert werden.

Vorzugsweise werden zusammen mit der Kennung von der Vorrichtung bereitgestellte, durch einen Benutzer der Vorrichtung änderbare Daten übertragen.

### Kurzbeschreibung der Zeichnungen

Bei der folgenden Beschreibung bevorzugter Ausführungsformen wird auf die beigefügten Zeichnungen Bezug genommen, die zeigen:
- Fig. 1: eine schematische Darstellung einer Ausführungsform der erfindungsgemäßen Anordnung, und
- Fig. 2: eine bevorzugte Ausführungsform der erfindungsgemäßen Vorrichtung.

### Beschreibung bevorzugter Ausführungsformen

Im Folgenden werden bevorzugte Ausführungsformen unter Bezugnahme auf ein System erläutert, das Fernsehprogramme (z.B. einzelne oder mehrere Filme) unter Verwendung kodierter Fernsehsignale bereitstellt, wobei Benutzer des Systems einzelne Fernsehprogramme individuell wählen und auf einem herkömmlichen Fernsehgerät betrachten können.

Es versteht sich, dass die folgenden Ausführungen ohne weiteres auf ein System übertragbar sind, das Radioprogramme (z.B. einzelne oder mehrere Sprachbeiträge, Hörspiele, Musik) unter Verwendung kodierter Radiosignale bereitstellt.

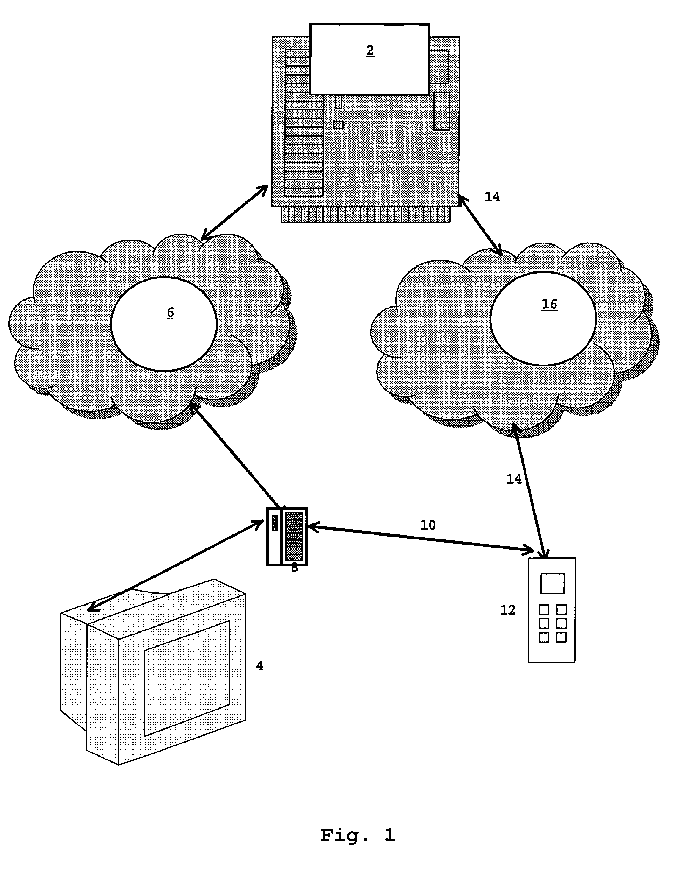

Fig. 1 veranschaulicht schematisch eine Ausführungsform der erfindungsgemäßen Anordnung, die auch als Umgebung bezeichnet werden kann. Diese Ausführungsform umfasst ein System 2 und eine Vielzahl von Fernsehgeräten, von denen der Einfachheit halber in Fig. 1 nur ein Fernsehgerät 4 gezeigt ist; die folgenden Ausführungen hinsichtlich des Fernsehgeräts 4 gelten entsprechend für alle weiteren Fernsehgeräte, sofern sie mit einer mit einem im Folgenden beschriebenen Empfänger vergleichbaren Vorrichtung zusammenarbeiten.

Das System 2 stellt Fernsehprogramme (z.B. einzelne oder mehrere Filme) unter Verwendung kodierter Fernsehsignale bereit. Das System 2 kann einen oder mehrere nicht dargestellte Rechnereinheiten (z.B. Server) umfassen.

Kodierte Fernsehsignale werden zum Fernsehgerät 4 über ein Netzwerk 6 übertragen. Im Folgenden wird davon ausgegangen, dass das Netzwerk 6 ein herkömmliches, bekanntes Breitbandnetz für Fernseh- und/oder Radiosignale ist.

Als Empfänger 8 zum Dekodieren kodierter Fernsehsignale des Systems 2 ist hierbei eine sogenannte Set-Top-Box vorgesehen, die dekodierte Fernsehsignale zu einem nicht gezeigten Empfänger des Fernsehgeräts 4 überträgt.

Zur Steuerung des Empfängers 8 dient eine erfindungsgemäße, hier als Fernbedienung bezeichnete Vorrichtung 12, mit der die im Folgenden näher erläuterte Kommunikation mit dem System 2 möglich ist.

Die Steuerung des Empfängers 8 durch die Fernbedienung 12 erfolgt über eine erste Signalstrecke 10, über die auch eine bidirektionale Kommunikation zwischen Empfänger 8 und Fernbedienung 12 möglich ist.

Zur Kommunikation zwischen der Fernbedienung 12 und dem System 2 ist eine Signalstrecke 14 vorgesehen, die bei der hier bevorzugten Ausführungsform ein GSM- und/oder UMTS-Telefonnetz 14 umfasst. Bei der hier bevorzugten Ausführungsform ist es ferner vorgesehen, dass über das Telefonnetz 16 SMSs oder MMSs übertragen werden können. Alternative Ausführungsformen können Signalstrecken 14 aufweisen, über die beispielsweise E-Mails übertragen werden können.

Um über die zweite Signalstrecke 14 zu kommunizieren, kann die Fernbedienung 12 eine nicht gezeigt SIM-Karte aufweisen; von dieser Ausführungsform wird im Folgenden ausgegangen.

Die SIM-Karte ist vorzugsweise nur in Verbindung mit der Fernbedienung 12 funktionsfähig, kann z.B. also nicht zum Betrieb eines herkömmlichen Mobiltelefons verwendet werden.

Es ist vorgesehen, dass die Vorrichtung 12 derart aufgebaut ist, dass sie für unterschiedliche Empfängertypen verwendet und auf unterschiedliche Weise betrieben werden kann. Dies kann dadurch erreicht werden, dass die Vorrichtung 12 als "Hardwaregerüst" ausgelegt wird, das gemäß unterschiedlicher und/oder modifizierbarer Steuerungsarten, insbesondere in Form von softwarebasierten Steuerverfahren, betrieben werden kann. Im Folgenden wird zur Veranschaulichung von einer softwarebasierten, ein Softwareprogramm umfassenden Steuerung der Vorrichtung 12 ausgegangen. Eine solche Steuerung kann auch mehrere Softwareprogramme und/oder Programmkodes umfassen.

Die Vorrichtung 12 kann vorab mit einem Softwareprogramm ausgestattet bereitgestellt werden. Alternativ ist es möglich, die Vorrichtung 12 ohne Softwareprogramm bereitzustellen, wobei die zum Betrieb der Vorrichtung 12 erforderliche Software bei der ersten Inbetriebnahme implementiert wird. Ferner ist es möglich, die Vorrichtung 12 mit einem Softwareprogramm vorab auszustatten, das für grundsätzlich erforderliche und/oder für eine Vielzahl unterschiedlicher Anwendungen geeignete Betriebsarten geeignet ist; anwendungsspezifische und/oder aktuelle Software kann bei der ersten Inbetriebnahme bzw. im Laufe der Zeit implementiert werden.

Um das Softwareprogramm oder Teile desselben zu implementieren, ist es vorgesehen, dass entsprechende Daten vom System 2 über die Signalstrecke 14 zur Vorrichtung 12 übertragen werden. Auf diese Weise können erstmalige Softwareimplementierungen, Implementierungen zur Softwareaktualisierung und Softwareänderungen sowie Softwaremodifikationen insbesondere zur Konfiguration der Vorrichtung 12 erreicht werden.

Empfängerbezogene Software oder Softwareteile können auch vom Empfänger 6 über die Signalstrecke 10 zur Vorrichtung 12 übertragen werden.

Derartige Übertragungen zur Vorrichtung 12 können bei der hier vorgesehenen Ausführungsform z.B. per SMS und/oder MMS, bei anderen Ausführungsformen z.B. per SMS und/oder MMS und/oder E-Mail erfolgen.

Ferner ist es vorgesehen, dass die Vorrichtung 12 durch deren Benutzer konfiguriert werden kann, insbesondere durch eine individuelle Anpassung der Steuerung der Vorrichtung 12. Dies kann durch eine vom Benutzer vorgenommene Modifikation und/oder Konfiguration der Steuerungssoftware erreicht werden, um beispielsweise Benutzerdialoge, Menüs, Sicherheitsvorgaben (z.B. Eingabe von PIN und/oder TAN), etc. individuell anzupassen.

Um ein von einem Benutzer gewünschtes Fernsehprogramm zu dekodieren und mit dem Fernsehgerät 4 zu betrachten, wird vom Benutzer mittels der Vorrichtung 12 das gewünschte Programm ausgewählt.

Die Programmauswahl kann erfolgen, indem eine das gewünschte Programm angebende Zahl, Zahlenkombination und/oder Text und/oder Zeitpunkt oder Zeitraum, an bzw. in dem das gewünschte Programm wiedergegeben werden soll, in die Fernbedienung 12 eingegeben werden. Dabei kann der Programmwunsch durch Betätigung einer nicht gezeigten Tastatur der Fernbedienung 12 eingegeben werden, wonach der Programmwunsch in eine in der Fernbedienung 12 vorab gespeicherten SMS eingebunden wird.

Hierbei kann der Benutzer durch eine auf einem nicht gezeigten Display der Fernbedienung 12 dargestellte, vorzugsweise durch die obige Softwaresteuerung bereitgestellte Benutzerführung unterstützt werden. Die Benutzerführung kann beispielsweise vordefinierte und/oder durch den Benutzer änderbare bzw. anpassbare Bestätigungsdialoge umfassen. Um eine missbräuchliche Verwendung zu vermeiden, kann der Eingabevorgang des Programmwunsches die Eingabe einer persönlichen Geheimkennung (z. B. PIN und/oder TAN) umfassen, ohne die der Eingabevorgang nicht erfolgreich durchgeführt werden kann.

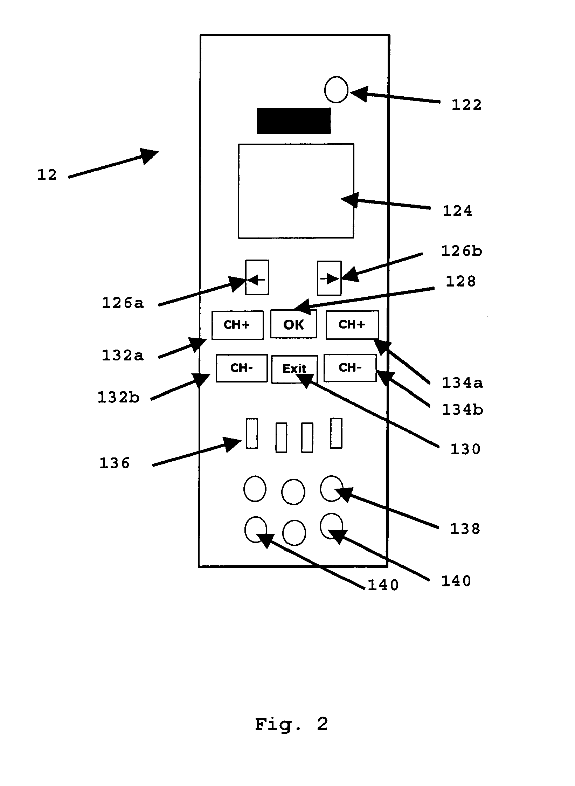

Fig. 2 veranschaulicht eine beispielhafte Ausführungsform der Vorrichtung 12. Die Vorrichtung 12 weist eine Taste 122 auf, mit dem der Empfänger 6 ein- und ausgeschaltet werden kann.

Ferner ist ein Display 124 zur Darstellung von Text- und/oder Bildinformationen vorgesehen, um den Benutzer über Betriebszustände der Vorrichtung 12, Betriebszustände des Empfängers 6, verfügbare herkömmliche Fernseh- und/oder Radioprogramme (z.B. öffentlich-rechtlicher Anstalten), verfügbare Fernseh- und/oder Radioprogramme von Pay-TV-Anbietern mit kontinuierlich laufenden Programmen, die vorteilhafter ebenfalls vom Empfänger 6 dekodierbar sind, und verfügbare, vom Empfänger 6 dekodierbare Fernseh- und/oder Radioprogramme von Pay-Per-View-Anbietern zu informieren.

Mittels zweier Tasten 126a und 126b kann der Benutzer in Darstellungen des Displays 124, beispielsweise in Form von Menus, Listings, etc., navigieren. Die Taste 128 ermöglicht es ihm bei Verwendung von Benutzerdialogen und/oder benutzerführenden Darstellungen eine Bestätigung einzugeben. Um beispielsweise eine Menüebene auf dem Display 124 zu verlassen, einen Benutzerdialog abzubrechen oder Betriebszustände der Vorrichtung 12 zu beenden, dient die Taste 130.

Um zwischen Programmen bzw. Kanälen in der bereitgestellten Reihenfolge zu wechseln ("Scrollen"), sind die Tasten 132a (der nächste Kanal in aufsteigender Folge) und 132b (der nächste Kanal in absteigender Folge) vorgesehen. Die Lautstärke kann mit den Tasten 134a (lauter) und 134b (leiser) geändert werden.

Die Tasten 136 sind als mit - beispielsweise in Abhängigkeit von Betriebszuständen der Vorrichtung 12, des Empfängers 6 und/oder des Fernsehgeräts 4 - unterschiedlichen Funktionen belegbare Tasten vorgesehen, um z.B. in einer Teletextdarstellung zu navigieren.

Mit der Taste 138 kann der Empfänger 6 und/oder das Fernsehgerät 4 durch Betätigung einer Taste in einen Teletextmodus versetzt werden.

Die Tasten 140 (Zahlenfeldtastatur von 0, 1, 2,... , 9) dienen zur direkten Eingabe von unterschiedliche Programme bzw. Kanäle angebenden Zahlen. Ferner ist es vorgesehen, insbesondere in Abhängigkeit von Betriebszuständen der Vorrichtung 12 und/oder des Empfängers 6, die Tasten 140 - vergleichbar zu den Tasten eines Telefons - so zu belegen, dass Buchstaben und/oder andere sich von Zahlen und Ziffern unterscheidende Zeichen eingegeben werden können. Auf diese Weise kann der Benutzer beispielsweise Modifikation von im Folgenden beschriebenen Daten (insbesondere die im Folgenden angenommene SMS), die von der Vorrichtung 12 zum System 2 übertragen werden können, vornehmen, Daten im Rahmen von Quizveranstaltungen eingeben, an Konsumentenbefragungen teilnehmen, E-Mails schreiben, etc.

Die Tasten 126-140 können von der Steuerung der Fernsteuerung 12 beispielsweise in Abhängigkeit von aktuellen Betriebszuständen und/oder Betriebsmodi mit unterschiedlichen Funktionen belegt werden. Auch ist es vorgesehen, dass ein oder mehrere Benutzer der Fernbedienung 12 die Tasten 126-140 mit unterschiedlichen Funktionen, insbesondere für unterschiedliche Benutzer mit unterschiedlichen Funktionen belegen kann; dies kann ergänzend, alternativ und/oder abweichend von den von der Steuerung der Fernbedienung 12 vornehmbaren Tastenbelegungen erfolgen. Ferner können die Tasten 126-140 vom System 2 mit unterschiedlichen Funktionen belegt werden, insbesondere indem entsprechende Steuerbefehle über die Signalstrecke 14 zur Fernbedienung 12 übertragen und/oder entsprechende Softwareprogramme über die Signalstrecke 14 zur Fernbedienung 12 übertragen und dort implementiert werden.

Danach wird die so modifizierte SMS, die nun die Programmauswahl enthält, über die Signalstrecke 14 zum System 2 übertragen.

Die automatische Bereitstellung einer die Fernbedienung 12 gegenüber dem System 2 identifizierenden Kennung erfolgt durch eine Identifikation (z.B. IMSI) oder Telefonnummer der Fernbedienung 12, die für die Kommunikation über die Signalstrecke 14 erforderlich ist und von der Fernbedienung 12 bzw. deren nicht gezeigten, für die Signalstrecke 14 ausgelegten Kommunikationseinrichtung automatisch bereitgestellt wird.

Die automatische Übertragung der Kennung erfolgt durch einen automatischen Aufbau einer Kommunikationsverbindung über die Signalstrecke 14 und die damit verbundene Übermittlung der Kennung von der Fernbedienung 12 zum System 2. Zum automatischen Aufbau einer Kommunikationsverbindung zwischen der Fernbedienung 12 und dem System 2 ist in der Fernbedienung 12 wenigstens eine dem System 2 zugeordnete Telefonnummer vorab gespeichert, die durch den Benutzer nicht geändert werden kann. Änderungen der Telefonnummer können durch eine entsprechende Datenübertragung vom System 2 zur Fernbedienung 12 durchgeführt werden.

Hat das System 2 die Kennung und den Programmwunsch erhalten, wird überprüft, ob die Kennung gültig ist und die Fernbedienung 12 identifiziert. Dies kann beispielsweise dadurch erfolgen, dass die den Programmwunsch umfassende SMS Kenndaten aufweist, die nur in Kombination mit der korrekten Kennung für die Fernbedienung 12 zur einer erfolgreichen Überprüfung der Identität der Fernbedienung 12 führen. Solche Kenndaten können dem Empfänger 8 zugeordnet sein und beispielsweise eine Gerätenummer des Empfängers 8 angeben und/oder zur Identifizierung einer für den Empfänger 8 vorgesehenen Smart-Karte dienen.

Bei nicht erfolgreicher Überprüfung der Kennung wird der Programmwunsch nicht erfüllt, sofern nicht beispielsweise in einem durch das System 2 eingeleiteten weiteren Vorgang zur Übermittlung von Kennung und Programmwunsch die korrekte Kennung übermittelt wird.

Bei erfolgreicher Überprüfung der Kennung stellt das System 2 dem Empfänger 8 die zur Dekodierung der Fernsehsignale, die dem Programmwunsch entsprechen, erforderlichen Informationen bereit, z.B. Dekodierungsschlüssel, Dekodierungsverfahren, Dekodierungsbeginn und/oder Dekodierungsdauer.

Wenn nach erfolgreicher Überprüfung der Kennung das System 2 mit dem Empfänger 8 die zur Erfüllung des Programmwunsches erforderliche Kommunikation nicht durchführen kann und/oder der Programmwunsch aus anderen Gründen (z.B. Fehler im Netzwerk 6) nicht erfüllt werden kann, ist es vorgesehen, dass das System 2 eine entsprechende Nachricht an die Fernbedienung 12 sendet.

Im Zusammenhang mit dem Programmwunsch stehende Abrechnungen können durch das System 2 anhand der Kennung eindeutig zugeordnet werden.

Alternativ ist es vorgesehen, dass die Kennung in Abhängigkeit einer vorabgeleisteten Zahlung zeitlich und/oder nutzungsabhängig gültig ist. Hierfür kann für die Fernbedienung 12 eine SIM-Karte in Form einer sogenannten Pre-Paid-Karte verwendet werden.

Um beim Betrieb der Fernbedienung 12 verwendete, in der Fernbedienung 12 gespeicherte Steuerbefehle, Softwareprogramme und Programmkodes zu modifizieren und insbesondere zu aktualisieren, überträgt das System 2 über die Signalstrecke 14 entsprechende Daten und/oder Software-Updates zur Fernbedienung 12. Diese Daten werden von der Fernbedienung 12, gegebenenfalls nach einer Bearbeitung, gespeichert und beim zukünftigen Betrieb verwendet.

Aufgrund der Kommunikationsmöglichkeit zwischen dem System 2 und der Fernbedienung 12 über die Signalstrecke 14 können ohne Unterbrechung eines Fernsehprogramms Programminformationen (virtuelle Fernsehzeitschrift), Nachrichten, Produkt- und/oder Dienstleistungsangebote, Quizspiele, etc. vom System 2 zur Fernbedienung 12 übertragen werden. Dies kann nach einer entsprechenden Anforderung, die von der Fernbedienung 12 zum System 2 übermittelt wird, in Abhängigkeit von einem aktuell vom Fernsehgerät 4 wiedergegebenen Programm, insbesondere mit diesem zeitlich korreliert, und/oder aufgrund anderer Kriterien (z.B. Werbemaßnahmen) erfolgen. Kosten in diesem Zusammenhang können wie Programmwünsche individuell nachträglich und/oder durch vorab Zahlung abgerechnet werden.

Bei einer bevorzugten Ausführungsform umfasst die Fernbedienung 12 einen nicht dargestellten Scanner, mit dem zur Erstellung eines Programmwunsches in einer Fernsehzeitschrift abgedruckte Programminformationen eingelesen werden können. Ferner ist es möglich, dass zur Definition eines Programmwunsches verwendbare Programminformationen vom Empfänger 8 und/oder dem Fernsehgerät 8 (z.B. unter Verwendung von Teletextinformationen) zur Fernbedienung 12 übertragen werden. Eine Wiedergabe von Programminformationen kann in allen Fällen über ein Display der Fernbedienung 12 erfolgen.

Unabhängig von der Art des aktuell vom Fernsehgerät wiedergegebenen Programms (z.B. kostenpflichtige Filme vs. kostenfreie Filme) kann die Fernbedienung 12 verwendet werden, um über das Fernsehgerät und/oder über die Fernbedienung bereitgestellte Angebote (z.B. im Rahmen von Teleshopping) zu wählen. Dabei kann das System eine zeitliche Korrelation zwischen aktuell bereitgestellten Angeboten herstellen, um die Wahl eines Angebots zu vereinfachen. Anstatt beispielsweise ein gewünschtes Produkt genau anzugeben, kann beispielsweise während eines aktuellen, das gewünschte Produkt betreffenden Teleshoppingangebots dem System 2 ein pauschaler Kaufwunsch mitgeteilt werden. Das System 2 ordnet dann aufgrund des Zeitpunkts und/oder Zeitraums des aktuellen Teleshoppingangebots und dem Erhalt des Kaufwunsches den Kaufwunsch dem gewünschten Produkt zu. Vorteilhafter Weise kann das System 2 nach Erhalt des Kaufwunsches und der Ermittlung, welches Produkt gewünscht ist, eine Bestätigung durch den Benutzer anfordern, die der Benutzer dann mittels der Fernbedienung 12 zum System 2 übertragen kann.

Ferner kann für die Fernbedienung 12 ein Betriebsmodus vorgesehen sein, in dem die Fernsteuerung 12 als mobiles Telefon arbeitet. Ein solcher Betriebsmodus kann beispielsweise durch in der Fernbedienung 12 vorab implementierte und/oder vom System 2 über die Signalstrecke 14 zur Fernbedienung 12 übertragene und dort zu implementierende Softwareprogramme erreicht werden. Letzteres ist insbesondere vorgesehen, um die von einem solchen Betriebsmodus bereitgestellten Funktionalitäten zu aktualisieren.

Bei dieser Ausführungsform ist es vorgesehen, dass die Fernbedienung 12 zusätzlich zu den in Fig. 2 gezeigten Komponenten einen Lautsprecher und ein Mikrophon (nicht gezeigt) umfasst, um beim Betrieb als mobiles Telefon Sprachsignale aus- und eingeben zu können. Das Display 124 kann verwendet werden, um in diesem Betriebsmodus empfangene und/oder zu versendende Text- und/oder Bildinformationen wiederzugeben. Die Aus- und/oder Eingabe und/oder die Wiedergabe von Text- und/oder Bildinformationen kann alternativ oder ergänzend unter Verwendung einer entsprechenden Datenübertragung von der Fernbedienung 12 über die Signalstrecke 10 zum Empfänger 6 über das Fernsehgerät 4, insbesondere über dessen Lautsprecher und Bildschirm erfolgen.

## Patentansprüche

1. Vorrichtung (12) für einen Empfänger (8) zum Dekodieren vorgegebener Fernseh- und/oder Radiosignale eines solche Signale in kodierter Form bereitstellenden Systems (2) unter der Voraussetzung einer vorherigen erfolgreichen Identifizierung der Vorrichtung (12) gegenüber dem System (2), mit:
- einer Empfängersteuereinrichtung zur Steuerung des Empfängers über eine erste Signalstrecke (10),
- einer Kennungseinrichtung zur automatischen Bereitstellung einer die Vorrichtung (12) identifizierenden Kennung, und
- einer Kommunikationseinrichtung zur automatischen Übertragung der Kennung von der Vorrichtung (12) zum System (2) über eine zweite Signalstrecke (14).

2. Vorrichtung (12) nach Anspruch 1, bei der die erste Signalstrecke (10) wenigstens eine der folgenden Signalstreckenarten umfasst:
- eine festverdrahtete Signalstrecke,
- eine Infrarot-Signalstrecke,
- eine Ultraschall-Signalstrecke,
- eine Bluetooth-Signalstrecke,
- eine Signalstrecke gemäß dem DECT-Standard,
- eine Hochfrequenzfunk-Signalstrecke,
- eine von einem Computernetzwerk bereitgestellte Signalstrecke.

3. Vorrichtung (12) nach Anspruch 1 oder 2, bei der die zweite Signalstrecke (14) wenigstens eine der folgenden Signalstreckenarten umfasst:
- eine festverdrahtete Signalstrecke,
- eine drahtlose Signalstrecke,
- eine Signalstrecke in einem mobilen und/oder stationären Telefonnetz,
- eine von einem Computernetzwerk bereitgestellte Signalstrecke, und
- eine Signalstrecke gemäß dem DECT-Standard.

4. Vorrichtung (12) nach einem der vorherigen Ansprüche, bei der
- die Empfängersteuereinrichtung eine Eingabeschnittstelle zur Eingabe von Steuerbefehlen durch einen Benutzer der Vorrichtung (12) aufweist, wobei die Eingabeschnittstelle wenigstens eine der folgenden Eingabemittel umfasst:
- eine Tastatur,
- eine Spracheingabeeinrichtung,
- eine berührempfindliche Eingabeeinrichtung, und
- eine Einrichtung zum Einlesen von gedruckten Kodes,
und
- die Kommunikationseinrichtung mit der Eingabeeinrichtung der Empfängersteuereinrichtung verbunden und die Kommunikationseinrichtung eingerichtet ist, eingegebene Steuerbefehle über die zweite Signalstrecke (14) zum System (2) automatisch zu übertragen.

5. Vorrichtung (12) nach einem der vorherigen Ansprüche, bei der die Kommunikationseinrichtung einen Speicher mit die zweite Signalstrecke (14) angebenden Daten umfasst.

6. Vorrichtung (12) nach einem der vorherigen Ansprüche, bei der die Kommunikationseinrichtung einen Speicher mit durch einen Benutzer der Vorrichtung (12) änderbaren, zur Übertragung zusammen mit der Kennung bereitgestellten Daten umfasst.

7. Vorrichtung (12) nach einem der vorherigen Ansprüche, bei der die Kommunikationseinrichtung eine zweite Empfangseinrichtung zum Empfang von Daten- und/oder Steuersignalen vom System (2) umfasst.

8. Vorrichtung (12) nach Anspruch 7, bei der die zweite Empfangseinrichtung eingerichtet ist, weitere Signale vom System (2) zu empfangen, die Fernseh- und/oder Radiosignale und/oder Informationen für einen Benutzer der Vorrichtung (12) bereitstellen.

9. Vorrichtung (12) nach einem der vorherigen Ansprüche, mit einer Wiedergabeeinrichtung, die wenigstens eines der folgenden Wiedergabemittel umfasst:
- ein alpha-numerisches Display,
- einen Bildschirm zur statischen und/oder dynamischen Wiedergabe von Bildern, und
- einen Lautsprecher,
wobei die Wiedergabeeinrichtung ausgelegt ist, die Signale vom System (2) wiederzugeben, die weitere Fernseh- und/oder Radiosignale und/oder die Informationen für einen Benutzer der Vorrichtung (12) bereitstellen.

10. Vorrichtung (12) nach einem der Ansprüche 7 bis 9,
- bei der die zweite Empfangseinrichtung eingerichtet ist, vom System (2) über die zweite Signalstrecke (14) Steuerbefehle übertragene für den Betrieb der Vorrichtung (12) zu empfangen, und
- mit einem Programmspeicher zum Speichern der Steuerbefehle.

11. Anordnung, mit:
- einem kodierte Fernseh- und/oder Radiosignale bereitstellenden System (2),
- einem Empfänger (8) zum Dekodieren vorgegebener kodierter Signale vom System (2),
- einer ersten Signalstrecke (6) zur Übertragung der kodierten Signale vom System (2) zum Empfänger (8),
- der Vorrichtung (12) nach einem der Ansprüche 1 bis 10,
- einer zweiten Signalstrecke (14) zur Übertragung der Kennung von der Vorrichtung (12) zum System (2), wobei der Empfänger eingerichtet ist, die kodierten Signale nur unter der Voraussetzung einer vorherigen erfolgreichen Identifikation der Vorrichtung (12) gegenüber dem System (2) zu dekodieren.

12. Anordnung nach Anspruch 11, bei dem das System (2) eingerichtet ist, aktuelle Steuerbefehle für den Betrieb der Vorrichtung (12) über die zweite Signalstrecke (14) zur Vorrichtung (12) zu übertragen.

13. Anordnung nach Anspruch 11 oder 12, bei der das System (2) eingerichtet ist, über die zweite Signalstrecke (14) von der Vorrichtung (12) zum System (2) übertragene Steuerbefehle und aktuell zu dekodierende Fernseh- und/oder Radiosignale zeitlich zu korrelieren.

14. Anordnung nach einem der Ansprüche 11 bis 13, bei der das System (2) eingerichtet ist, zeitunkorreliert zu aktuell zu dekodierenden Fernseh- und/oder Radiosignalen weitere Signale zum Empfänger und/oder zur Vorrichtung (12) zu übertragen, die Fernseh- und/oder Radiosignale und/oder Informationen für einen Benutzer bereitstellen.

15. Verfahren für einen Empfänger (8) zum Dekodieren vorgegebener Fernseh- und/oder Radiosignale eines solche Signale in kodierten Form bereitstellenden Systems (2) unter der Voraussetzung einer vorherigen erfolgreichen Identifizierung der Vorrichtung (12) nach einem der Ansprüche 1 bis 10 gegenüber dem System (2), mit folgenden Schritten:
- Vorgegeben von durch den Empfänger zu dekodierenden Signalen mittels der Vorrichtung (12),
- automatisches Übertragen einer die Vorrichtung (12) identifizierenden Kennung zum System (2) über eine Signalstrecke (14) mittels der Vorrichtung (10),
- Überprüfen der Kennung durch das System (2),
- Dekodieren der vorgegebenen Signale durch den Empfänger (8), wenn das Überprüfen der Kennung durch das System (2) erfolgreich war.

16. Verfahren nach Anspruch 15, bei dem für eine Steuerung des Empfängers (8) durch die Vorrichtung (10) wenigstens eine der folgenden Signalstreckenarten verwendet wird:
- eine festverdrahtete Signalstrecke,
- eine Infrarot-Signalstrecke,
- eine Ultraschall-Signalstrecke,
- eine Bluetooth-Signalstrecke,
- eine Signalstrecke gemäß dem DECT-Standard,
- eine Hochfrequenzfunk-Signalstrecke,
- eine von einem Computernetzwerk bereitgestellte Signalstrecke.

17. Verfahren nach Anspruch 15 oder 16, bei dem zum automatischen Übertragen der Kennung die Kennung über wenigstens eine der folgenden Signalstreckenarten übertragen wird:
- eine festverdrahtete Signalstrecke,
- eine drahtlose Signalstrecke,
- eine Signalstrecke in einem mobilen und/oder stationären Telefonnetz,
- eine von einem Computernetzwerk bereitgestellte Signalstrecke, und
- eine Signalstrecke gemäß dem DECT-Standard.

18. Verfahren nach einem der Ansprüche 15 bis 17,
- bei dem das Vorgegeben von durch den Empfänger zu dekodierenden Signalen wenigstens einen der folgenden Eingabeverfahrensschritte umfasst:
- Eingeben der Vorgabe über eine Tastatur,
- Eingeben der Vorgabe über eine Spracheingabeeinrichtung,
- Eingeben der Vorgabe über eine berührempfindliche Eingabeeinrichtung, und
- Eingeben der Vorgabe über eine Einrichtung zum Einlesen von gedruckten Kodes,
und
- mit einem Übertragen der Vorgabe von der Vorrichtung (12) über die zweite Signalstrecke (14) zu dem System (2).

19. Verfahren nach einem der Ansprüche 15 bis 18, bei dem vor Übertragung der Kennung und/oder nach erfolgreicher Überprüfung der Kennung eine weitere Kennung zum System (2) übertragen wird und das Dekodieren der vorgegebenen Signale durch den Empfänger durchgeführt wird, wenn das Überprüfen der weiteren Kennung durch das System (2) erfolgreich war.

20. Verfahren nach einem der Ansprüche 15 bis 19, bei dem zum Aktualisieren der Vorrichtung (12) über die Signalstrecke (14) aktuelle Steuerbefehle vom System (2) zur Vorrichtung (12) übertragen werden.

21. Verfahren nach einem der Ansprüche 15 bis 20, bei dem Steuerbefehle zeitkorreliert zu aktuell zu dekodierenden Fernseh- und/oder Radiosignalen von der Vorrichtung (12) zum System (2) übertragen werden.

22. Verfahren nach einem der Ansprüche 15 bis 21, bei dem zeitunkorreliert zu aktuell zu dekodierenden Fernseh- und/oder Radiosignalen weitere Signale vom System (2) zum Empfänger (8) und/oder zur Vorrichtung (12) übertragen werden, die Fernseh- und/oder Radiosignale und/oder Informationen für einen Benutzer bereitstellen.

23. Verfahren nach einem der Ansprüche 15 bis 22, bei dem zusammen mit der Kennung von der Vorrichtung (12) bereitgestellte, durch einen Benutzer der Vorrichtung (12) änderbare Daten übertragen werden.

## Geänderte Patentansprüche

### Geänderte Patentansprüche gemäss Regel 86(2) EPÜ.

**1.** Vorrichtung (12) für einen Empfänger (8) zum Dekodieren vorgegebener Fernseh- und/oder Radiosignale eines solche Signale in kodierter Form bereitstellenden Systems (2) unter der Voraussetzung einer vorherigen erfolgreichen Identifizierung der Vorrichtung (12) gegenüber dem System (2), mit:
- einer Kennungseinrichtung zur automatischen Bereitstellung einer die Vorrichtung (12) identifizierenden Kennung,
**gekennzeichnet durch**
- eine Empfängersteuereinrichtung zur Steuerung des Empfängers über eine erste Signalstrecke (10), und
- eine Kommunikationseinrichtung zur automatischen Übertragung der Kennung von der Vorrichtung (12) zum System (2) über eine zweite Signalstrecke (14).

**2.** Vorrichtung (12) nach Anspruch 1, bei der die erste Signalstrecke (10) wenigstens eine der folgenden Signalstreckenarten umfasst:
- eine festverdrahtete Signalstrecke,
- eine Infrarot-Signalstrecke,
- eine Ultraschall-Signalstrecke,
- eine Bluetooth-Signalstrecke,
- eine Signalstrecke gemäß dem DECT-Standard,
- eine Hochfrequenzfunk-Signalstrecke,
- eine von einem Computernetzwerk bereitgestellte Signalstrecke.

**3.** Vorrichtung (12) nach Anspruch 1 oder 2, bei der die zweite Signalstrecke (14) wenigstens eine der folgenden Signalstreckenarten umfasst:
- eine festverdrahtete Signalstrecke,
- eine drahtlose Signalstrecke,
- eine Signalstrecke in einem mobilen und/oder stationären Telefonnetz,
- eine von einem Computernetzwerk bereitgestellte Signalstrecke, und
- eine Signalstrecke gemäß dem DECT-Standard.

**4.** Vorrichtung (12) nach einem der vorherigen Ansprüche, bei der
- die Empfängersteuereinrichtung eine Eingabeschnittstelle zur Eingabe von Steuerbefehlen durch einen Benutzer der Vorrichtung (12) aufweist, wobei die Eingabeschnittstelle wenigstens eine der folgenden Eingabemittel umfasst:
- eine Tastatur,
- eine Spracheingabeeinrichtung,
- eine berührempfindliche Eingabeeinrichtung, und
- eine Einrichtung zum Einlesen von gedruckten Kodes,
und
- die Kommunikationseinrichtung mit der Eingabeeinrichtung der Empfängersteuereinrichtung verbunden und die Kommunikationseinrichtung eingerichtet ist, eingegebene Steuerbefehle über die zweite Signalstrecke (14) zum System (2) automatisch zu übertragen.

**5.** Vorrichtung (12) nach einem der vorherigen Ansprüche, bei der die Kommunikationseinrichtung einen Speicher mit die zweite Signalstrecke (14) angebenden Daten umfasst.

**6.** Vorrichtung (12) nach einem der vorherigen Ansprüche, bei der die Kommunikationseinrichtung einen Speicher mit durch einen Benutzer der Vorrichtung (12) änderbaren, zur Übertragung zusammen mit der Kennung bereitgestellten Daten umfasst.

**7.** Vorrichtung (12) nach einem der vorherigen Ansprüche, bei der die Kommunikationseinrichtung eine zweite Empfangseinrichtung zum Empfang von Daten- und/oder Steuersignalen vom System (2) umfasst.

**8.** Vorrichtung (12) nach Anspruch 7, bei der die zweite Empfangseinrichtung eingerichtet ist, weitere Signale vom System (2) zu empfangen, die Fernseh- und/oder Radiosignale und/oder Informationen für einen Benutzer der Vorrichtung (12) bereitstellen.

**9.** Vorrichtung (12) nach einem der vorherigen Ansprüche, mit einer Wiedergabeeinrichtung, die wenigstens eines der folgenden Wiedergabemittel umfasst:
- ein alpha-numerisches Display,
- einen Bildschirm zur statischen und/oder dynamischen Wiedergabe von Bildern, und
- einen Lautsprecher,
wobei die Wiedergabeeinrichtung ausgelegt ist, die Signale vom System (2) wiederzugeben, die weitere Fernseh- und/oder Radiosignale und/oder die Informationen für einen Benutzer der Vorrichtung (12) bereitstellen.

**10.** Vorrichtung (12) nach einem der Ansprüche 7 bis 9,
- bei der die zweite Empfangseinrichtung eingerichtet ist, vom System (2) über die zweite Signalstrecke (14) Steuerbefehle übertragene für den Betrieb der Vorrichtung (12) zu empfangen, und
- mit einem Programmspeicher zum Speichern der Steuerbefehle.

**11.** Anordnung, mit:
- einem kodierte Fernseh- und/oder Radiosignale bereitstellenden System (2), und
- einem Empfänger (8) zum Dekodieren vorgegebener kodierter Signale vom System (2),
- wobei der Empfänger eingerichtet ist, die kodierten Signale nur unter der Voraussetzung einer vorherigen erfolgreichen Identifikation der Vorrichtung (12) gegenüber dem System (2) zu dekodieren,
**gekennzeichnet durch**
- eine erste Signalstrecke (6) zur Übertragung der kodierten Signale vom System (2) zum Empfänger (8),
- die Vorrichtung (12) nach einem der Ansprüche 1 bis 10,
- eine zweite Signalstrecke (14) zur Übertragung der Kennung von der Vorrichtung (12) zum System (2).

**12.** Anordnung nach Anspruch 11, bei dem das System (2) eingerichtet ist, aktuelle Steuerbefehle für den Betrieb der Vorrichtung (12) über die zweite Signalstrecke (14) zur Vorrichtung (12) zu übertragen.

**13.** Anordnung nach Anspruch 11 oder 12, bei der das System (2) eingerichtet ist, über die zweite Signalstrecke (14) von der Vorrichtung (12) zum System (2) übertragene Steuerbefehle und aktuell zu dekodierende Fernseh- und/oder Radiosignale zeitlich zu korrelieren.

**14.** Anordnung nach einem der Ansprüche 11 bis 13, bei der das System (2) eingerichtet ist, zeitunkorreliert zu aktuell zu dekodierenden Fernseh- und/oder Radiosignalen weitere Signale zum Empfänger und/oder zur Vorrichtung (12) zu übertragen, die Fernseh- und/oder Radiosignale und/oder Informationen für einen Benutzer bereitstellen.

**15.** Verfahren für einen Empfänger (8) zum Dekodieren vorgegebener Fernseh- und/oder Radiosignale eines solche Signale in kodierten Form bereitstellenden Systems (2) unter der Voraussetzung einer vorherigen erfolgreichen Identifizierung der Vorrichtung (12) nach einem der Ansprüche 1 bis 10 gegenüber dem System (2), mit folgenden Schritten:
- Vorgegeben von durch den Empfänger zu dekodierenden Signalen mittels der Vorrichtung (12),
- automatisches Übertragen einer die Vorrichtung (12) identifizierenden Kennung zum System (2) über eine Signalstrecke (14) mittels der Vorrichtung (10),
- Überprüfen der Kennung durch das System (2),
- Dekodieren der vorgegebenen Signale durch den Empfänger (8), wenn das Überprüfen der Kennung durch das System (2) erfolgreich war.

**16.** Verfahren nach Anspruch 15, bei dem für eine Steuerung des Empfängers (8) durch die Vorrichtung (10) wenigstens eine der folgenden Signalstreckenarten verwendet wird:
- eine festverdrahtete Signalstrecke,
- eine Infrarot-Signalstrecke,
- eine Ultraschall-Signalstrecke,
- eine Bluetooth-Signalstrecke,
- eine Signalstrecke gemäß dem DECT-Standard,
- eine Hochfrequenzfunk-Signalstrecke,
- eine von einem Computernetzwerk bereitgestellte Signalstrecke.

**17.** Verfahren nach Anspruch 15 oder 16, bei dem zum automatischen Übertragen der Kennung die Kennung über wenigstens eine der folgenden Signalstreckenarten übertragen wird:
- eine festverdrahtete Signalstrecke,
- eine drahtlose Signalstrecke,
- eine Signalstrecke in einem mobilen und/oder stationären Telefonnetz,
- eine von einem Computernetzwerk bereitgestellte Signalstrecke, und
- eine Signalstrecke gemäß dem DECT-Standard.

**18.** Verfahren nach einem der Ansprüche 15 bis 17,
- bei dem das Vorgegeben von durch den Empfänger zu dekodierenden Signalen wenigstens einen der folgenden Eingabeverfahrensschritte umfasst:
- Eingeben der Vorgabe über eine Tastatur,
- Eingeben der Vorgabe über eine Spracheingabeeinrichtung,
- Eingeben der Vorgabe über eine berührempfindliche Eingabeeinrichtung, und
- Eingeben der Vorgabe über eine Einrichtung zum Einlesen von gedruckten Kodes, und
- mit einem Übertragen der Vorgabe von der Vorrichtung (12) über die zweite Signalstrecke (14) zu dem System (2).

**19.** Verfahren nach einem der Ansprüche 15 bis 18, bei dem vor Übertragung der Kennung und/oder nach erfolgreicher Überprüfung der Kennung eine weitere Kennung zum System (2) übertragen wird und das Dekodieren der vorgegebenen Signale durch den Empfänger durchgeführt wird, wenn das Überprüfen der weiteren Kennung durch das System (2) erfolgreich war.

**20.** Verfahren nach einem der Ansprüche 15 bis 19, bei dem zum Aktualisieren der Vorrichtung (12) über die Signalstrecke (14) aktuelle Steuerbefehle vom System (2) zur Vorrichtung (12) übertragen werden.

**21.** Verfahren nach einem der Ansprüche 15 bis 20, bei dem Steuerbefehle zeitkorreliert zu aktuell zu dekodierenden Fernseh- und/oder Radiosignalen von der Vorrichtung (12) zum System (2) übertragen werden.

**22.** Verfahren nach einem der Ansprüche 15 bis 21, bei dem zeitunkorreliert zu aktuell zu dekodierenden Fernseh- und/oder Radiosignalen weitere Signale vom System (2) zum Empfänger (8) und/oder zur Vorrichtung (12) übertragen werden, die Fernseh- und/oder Radiosignale und/oder Informationen für einen Benutzer bereitstellen.

**23.** Verfahren nach einem der Ansprüche 15 bis 22, bei dem zusammen mit der Kennung von der Vorrichtung (12) bereitgestellte, durch einen Benutzer der Vorrichtung (12) änderbare Daten übertragen werden.
